# EUROPÄISCHE PATENTANMELDUNG

(11) **EP 0 969 359 A2**
(43) Veröffentlichungstag der Anmeldung: **05.01.2000**
(21) Anmeldenummer: 99112377.9
(22) Anmeldetag: 29.06.1999
(51) Int. Cl.: G06F 9/44, G06F 9/445

(54) **Verfahren zur Aktualisierung von Software und/oder Daten in verteilten Systemen**

(30) Priorität: 03.07.1998 DE 19829749
(71) Anmelder: ROBERT BOSCH GMBH, 70442 Stuttgart (DE)
(72) Erfinder: Eli, Bernhard, 65428 Rüsselsheim (DE); Grom, Sigrid, 61250 Usingen (DE); Diehl, Rolf, 55578 Wallertheim (DE); Valler, Christoph, 85653 Aying (DE)

(57) **Zusammenfassung**

Die Erfindung betrifft ein Verfahren zur Aktualisierung von Software und/oder Daten in verteilten Systemen, wobei zu aktualisierende Baugruppen und/oder Dateien von einem die aktualisierte Software aufweisenden zweiten Datenträger durch eine zentrale Steuerung eines Rechensystems in einen Speicher des ersten Datenträgers übertragen werden, wobei die noch nicht aktualisierten Baugruppen und/oder Dateien auf dem ersten Datenträger im Speicher zuvor gelöscht werden.

Es ist vorgesehen, daß zu aktualisierende Baugruppen (20, 22, 24, 26, 28) und/oder Dateien (32, 34, 36, 38, 40) zunächst in eine Liste (16, 30) eingetragen werden, und dann nach Abschluß der Liste (16, 30) die Aktualisierung gestartet wird, wobei im Speicher des ersten Datenträgers nur die Speichersegmente gelöscht werden, die mit den in der Liste (16, 30) eingetragenen Baugruppen (20, 22, 24, 26, 28) und/oder Dateien (32, 34, 36, 38, 40) neu zu beschreiben sind.

## Beschreibung

Die Erfindung betrifft ein Verfahren zur Aktualisierung einer auf einem ersten Datenträger gespeicherten Software mit den im Oberbegriff des Anspruchs 1 genannten Merkmalen.

### Stand der Technik

Es ist bekannt, bei den unterschiedlichsten Anwendungsgebieten, beispielsweise der automatischen Steuerung von Anlagen, Maschinen oder dergleichen, einen Programmablauf mit einer Software zu steuern. Die Software ist hierbei auf einem Speicher abgelegt und mittels eines Mikroprozessors abarbeitbar. Je nach Anwendungsfall besteht die Software aus einem Betriebssystem und spezieller Anwendungssoftware. Die Anwendungssoftware setzt sich aus einer Vielzahl von Programmdateien und Datendateien zusammen.

Üblicherweise wird die Anwendungssoftware in zeitlichen Abständen überarbeitet und aktualisiert. Um den Anwendern die aktualisierte Software zur Verfügung zu stellen, ist das Überspielen eines sogenannten Updates bekannt. Hierbei werden Baugruppen und/oder Dateien der aktualisierten Software von einem zweiten Datenträger mittels einer zentralen Steuerung des Betriebssystems von dem zweiten Datenträger auf den ersten Datenträger übertragen, wobei die noch nicht aktualisierten Baugruppen und/oder Dateien auf dem Speicher des ersten Datenträgers zuvor gelöscht werden.

Bei dem bekannten Verfahren ist nachteilig, daß einerseits sämtliche Baugruppen und/oder Dateien im Speicher des ersten Datenträgers gelöscht werden, obwohl oftmals nur eine teilweise Aktualisierung notwendig ist. Ferner ist bekannt, die Aktualisierung der Baugruppen und/oder Dateien in einer festgelegten Reihenfolge durchzuführen, wobei die einzelnen Baugruppen einzeln und nacheinander übertragen werden.

### Vorteile der Erfindung

Das erfindungsgemäße Verfahren mit den im Anspruch 1 genannten Merkmalen bietet den Vorteil, daß eine Aktualisierung einer Anwendersoftware wesentlich einfacher und schneller durchgeführt werden kann. Dadurch, daß zu aktualisierende Baugruppen und/oder Dateien zunächst von dem zweiten Datenträger in eine Liste eingetragen werden und nach Abschluß der Liste die Aktualisierung gestartet wird, wobei im Speicher des ersten Datenträgers nur die Speichersegmente gelöscht werden, die mit den in der Liste eingetragenen Baugruppen und/oder Dateien neu zu beschreiben sind, ist vorteilhaft möglich, einerseits ein paralleles Aktualisieren mehrerer Baugruppen und/oder Dateien durchzuführen, da diese zunächst in die Liste eingetragen sind, so daß vom Betriebssystem zunächst nur die Informationen gesammelt werden, welche Baugruppen und/oder Dateien zu aktualisieren sind und andererseits, durch die Liste, eine Auswahl der Baugruppen und/oder Dateien bekannt ist, die tatsächlich aktualisiert werden müssen. Insofern können nicht zu aktualisierende Baugruppen und/oder Dateien im Speicher des ersten Datenträgers verbleiben, so daß die gesamte Abarbeitungszeit für das Aktualisieren zum einen infolge der Parallelübertragung mehrerer Baugruppen und/oder Dateien und zum anderen durch eine Einschränkung auf die nur tatsächlich zu aktualisierenden Baugruppen und/oder Dateien wesentlich beschleunigt ist. Das Betriebssystem und somit die Anwendersoftware, stehen somit sehr viel schneller wieder für die Abarbeitung der Software den Nutzern zur Verfügung.

Weitere bevorzugte Ausgestaltungen der Erfindung ergeben sich aus übrigen, in den Unteransprüchen genannten Merkmalen.

So ist in bevorzugter Ausgestaltung der Erfindung vorgesehen, daß zu aktualisierende Baugruppen mit ihrer physikalischen Adresse und dem zugehörigen Ladelistenname in eine down-load-Liste eingetragen werden. Diese down-load-Liste erfaßt zunächst alle zu aktualisierenden Baugruppen, wobei nach Abschluß der down-load-Liste die zu aktualisierenden Baugruppen parallel übertragen werden. Hierdurch wird der Übertragungsvorgang der zu aktualisierenden Baugruppen gegenüber einer nacheinanderfolgenden Übertragung wesentlich beschleunigt.

Ferner ist in bevorzugter Ausgestaltung der Erfindung vorgesehen, daß beim Aktualisieren von Dateien, insbesondere Programmdateien und/oder Datendateien, diese in eine Ladeliste eingetragen werden und nur die in der Ladeliste eingetragenen Programmdateien und Datendateien zu der zugehörigen Baugruppe übertragen werden, wobei nur die zu aktualisierenden Datendateien und/oder Programmdateien zuvor gelöscht wurden. Somit wird der Gesamtaufwand der zu übertragenden Dateien erheblich verringert, was zu einer Zeiteinsparung führt.

### Zeichnungen

Die Erfindung wird nachfolgend in Ausführungsbeispielen anhand der zugehörigen Zeichnungen näher erläutert. Es zeigen:
- Figur 1: ein Blockschaltbild einer Aktualisierung von Baugruppen und
- Figur 2: ein Blockschaltbild einer Aktualisierung von Dateien einer Baugruppe.

### Beschreibung der Ausführungsbeispiele

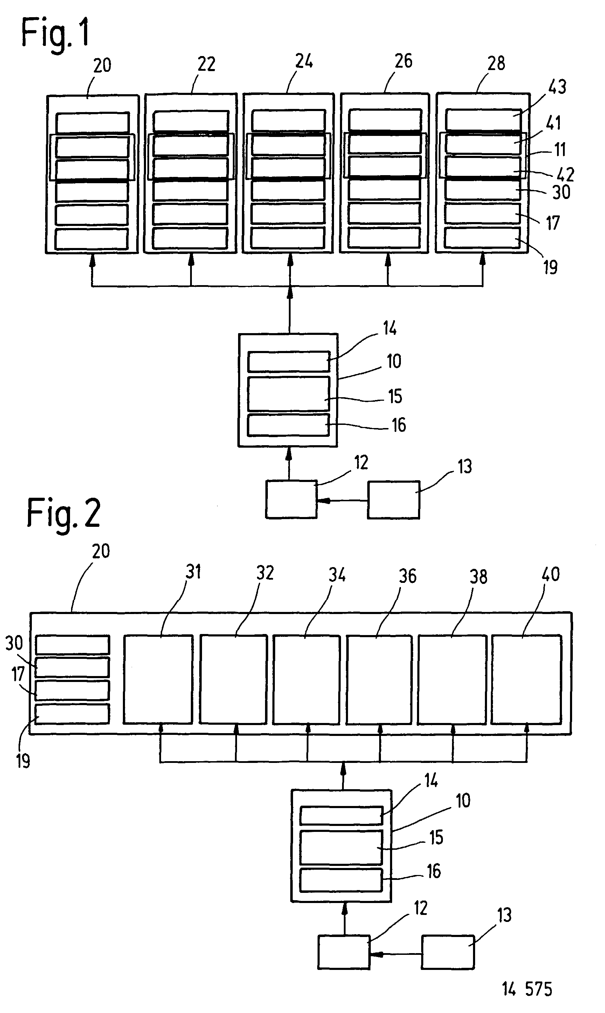

In Figur 1 ist in einem Blockschaltbild ein Rechensystem 10 gezeigt, das beispielsweise der Ansteuerung von Anlagen, Maschinen oder dergleichen dient. Das Rechensystem 10 umfaßt nicht näher dargestellte Hardware-Bauelemente und eine in einem Speicher 12, beispielsweise einer Festplatte, abgelegte Software. Die Software umfaßt ein Betriebssystem und spezielle Anwenderprogramme, die hier im einzelnen nicht näher bezeichnet sind. Die Baugruppen 20, 22, 24, 26, 28 ihrerseits bestehen jeweils aus im Speicher 11 abgelegten einzelnen Datendateien 41 und Programmdateien 42 und einer Steuerung 43. Die Strukturierung von Software ist allgemein bekannt, so daß im Rahmen der vorliegenden Beschreibung hierauf nicht näher eingegangen werden soll.

Die Speicher 11 auf den Baugruppen 20, 22, 24, 26, 28 bilden jeweils einen ersten Datenträger (Flash) für die Software, auf die auf einem zweiten Datenträger (Speicher 12) abgelegte Software aktualisiert werden soll. Die Software kann beispielsweise von Diskette oder CD-ROM 13 oder dergleichen auf den Speicher 12 übertragen werden.

Diese Aktualisierung wird von einem Inbetriebnahme-Programm (task) 15 übernommen, das als Softwarepaket in einer zentralen Steuerung 14 abgelegt ist. Diese ist Teil des Rechensystems 10.

Über das Inbetriebnahme-Programm 15 werden zunächst die zu ladenden Baugruppen 20, 22, 24, 26, 28 in eine down-load-Liste 16 eingetragen. Gemäß dem in Figur 1 gezeigten Ausführungsbeispiel sollen insgesamt fünf Baugruppen 20, 22, 24, 26 und 28 aktualisiert werden. Diese Baugruppen 20, 22, 24, 26 und 28 sind in der down-load-Liste 16 eingetragen, wobei diese mittels des Inbetriebnahme-Programms 15 übernommen wurden. Diese Übernahme erfolgt folgendermaßen. Beim Eintrag der ersten Baugruppe 20 in die down-load-Liste 16 wird ein Timer gestartet. Dieser Timer wird bei jedem neuen Eintrag einer der Baugruppen 20, 22, 24, 26, 28 erneut gestartet. Somit werden mittels des Inbetriebnahme-Programms 15 zunächst alle zu aktualisierenden Baugruppen 20, 22, 24, 26, 28 in der down-load-Liste 16 gesammelt. Nach Ablauf des Timers, es erfolgt also kein erneuter Start des Timers um eine weitere Baugruppen in die down-load-Liste 16 einzutragen, wird den Baugruppen 20, 22, 24, 26, 28 die gleiche logische Adresse 17 zugeteilt. Die Baugruppen 20, 22, 24, 26 und 28 besitzen somit eine bestimmte definierte physikalische Adresse 19, die unterschiedlich sind und der jeweiligen Baugruppe 20, 22, 24, 26, 28 entsprechen und eine gleiche logische Adresse 17. An die gleiche logische Adresse 17 aller Baugruppen 20, 22, 24, 26, 28 wird zuerst der Auftrag zum Löschen der alten Programme/Daten 42, 41 im Speicher 11 gesandt. Anschließend werden die zu aktualisierenden Programme/Daten 42, 41 vom Speicher 12 zu den Baugruppen 20, 22, 24, 26, 28 übertragen. Nachdem das Laden (Aktualisieren) der Baugruppen 20, 22, 24, 26 und 28 abgeschlossen ist, werden die aktualisierten Baugruppen 20, 22, 24, 26, 28 aus der down-load-Liste 16 gelöscht. Die Baugruppen 20, 22, 24, 26, 28 löschen die gemeinsame logische Adresse 17. Somit kann die logische Adresse 17 für einen Ladevorgang von nächsten Baugruppen genutzt werden. Insbesondere wenn Baugruppen 20, 22, 24, 26, 28 unterschiedlichen Typs zu aktualisieren sind, werden zunächst alle Baugruppen eines Typs in die down-load-Liste 16 eingetragen und diese gemeinsam, das heißt parallel auf den oder die ersten Speicher 11 übertragen. Nach Ablauf des geschilderten Verfahrens werden dann die Baugruppen des nächsten Typs, wiederum gemeinsam, geladen. Durch dieses parallele Laden von Baugruppen eines Typs wird die Aktualisierung der Software in den Baugruppen beschleunigt, so daß das Rechensystem 10 schneller wieder einem Anwender zur Verfügung steht.

In Figur 2 ist ein weiteres Ausführungsbeispiel gezeigt, wobei gleiche Teile wie in Figur 1 mit gleichen Bezugszeichen versehen und nicht nochmals erläutert sind. Anhand Figur 2 soll die Aktualisierung von Programmdateien 42 und/oder Datendateien 41 innerhalb einer Baugruppe verdeutlicht werden. Dies kann beispielsweise für jede der Baugruppen 20, 22, 24, 26, 28 gemäß Figur 1 erfolgen. Die jeweilige Baugruppe, im Beispiel wird von Baugruppen 20 ausgegangen, wird in eine Ladeliste 30 eingetragen. Dieser Ladeliste werden die Programme und/oder Datendateien 31, 32, 34, 36, 38 und 40 mitgeteilt, die zu aktualisieren sind und die auf einzelnen Segmenten des Speichers 11 abgelegt sind. Somit werden aus allen Dateien einer Baugruppe 20 nur die Dateien 31, 32, 34, 36, 38, 40 ausgesucht, die tatsächlich zu aktualisieren sind, während die nicht zu aktualisierenden Dateien in die Ladeliste 30 nicht eingetragen werden. Nach Beendigung der Eintragung der Dateien in die Ladeliste 30 wird über die zentrale Steuerung 14 das Löschen der entsprechenden Segmente im Speicher 11 der Baugruppe 20 veranlaßt. Danach werden die einzelnen Blöcke der Dateien vom Speicher 12 in die dafür vorgesehenen Segmente des Flash-Prom (Speicher 11) der Baugruppe 20 geladen.

Durch die Beschränkung der Aktualisierung auf die tatsächlich neuen Programmdateien und/oder Datendateien wird die Aktualisierung der Software beschleunigt, so daß das Rechensystem 10 einem Anwender ebenfalls eher zur Verfügung steht.

Nach einem weiteren Ausführungsbeispiel sind Aktualisierungen von Software möglich, die die Beispiele gemäß Figur 1 und Figur 2 kombiniert anwenden. So können beispielsweise zunächst zu aktualisierende Baugruppen und anschließend bei verbleibenden Baugruppen zu aktualisierende Programmdateien und/oder Datendateien übertragen werden. Insgesamt ergibt sich somit eine wesentliche Vereinfachung und insbesondere Beschleunigung der Aktualisierung der Software im Speicher 11.

## Patentansprüche

1. Verfahren zur Aktualisierung von Software und/oder Daten in verteilten Systemen, wobei zu aktualisierende Baugruppen und/oder Dateien von einem die aktualisierte Software aufweisenden zweiten Datenträger durch eine zentrale Steuerung eines Rechensystems in einen Speicher des ersten Datenträgers übertragen werden, wobei die noch nicht aktualisierten Baugruppen und/oder Dateien auf dem ersten Datenträger im Speicher zuvor gelöscht werden, **dadurch gekennzeichnet**, daß zu aktualisierende Baugruppen (20, 22, 24, 26, 28) und/oder Dateien (31, 32, 34, 36, 38, 40) zunächst in eine Liste (16, 30) eingetragen werden, und dann nach Abschluß der Liste (16, 30) die Aktualisierung gestartet wird, wobei im Speicher (11) des ersten Datenträgers nur die Speichersegmente gelöscht werden, die mit den in der Liste (16, 30) eingetragenen Baugruppen (20, 22, 24, 26, 28) und/oder Dateien (31, 32, 34, 36, 38, 40) neu zu beschreiben sind.

2. Verfahren nach Anspruch 1, **dadurch gekennzeichnet**, daß die zu aktualisierenden Baugruppen (20, 22, 24, 26, 28) mit ihrer physikalischen Adresse (19)und den zugehörigen Ladelistennamen (30)in eine down-load-Liste (16) eingetragen werden.

3. Verfahren nach einem der vorhergehenden Ansprüche, **dadurch gekennzeichnet**, daß nach Abschluß der down-load-Liste (16) alle Baugruppen (20, 22, 24, 26, 28) parallel vom Speicher (12) geladen werden.

4. Verfahren nach einem der vorhergehenden Ansprüche, **dadurch gekennzeichnet**, daß die Baugruppen (20, 22, 24, 26, 28) mittels eines Inbetriebnahme-Programms (task)(15) geladen werden, das als Softwarepaket in einer zentralen Steuerung (14) des Rechensystems (10) abgelegt ist.

5. Verfahren nach einem der vorhergehenden Ansprüche, **dadurch gekennzeichnet**, daß beim ersten Eintrag einer Baugruppe (20) in die down-load-Liste (16) ein Timer gestartet wird, der Timer bei jedem Eintrag einer weiteren Baugruppe (22, 24, 26, 28) erneut gestartet wird.

6. Verfahren nach einem der vorhergehenden Ansprüche, **dadurch gekennzeichnet**, daß nach Ablauf des Timers allen in die down-load-Liste (16) eingetragenen Baugruppen (20, 22, 24, 26, 28) eine gleiche logische Adresse zugeteilt wird.

7. Verfahren nach einem der vorhergehenden Ansprüche, **dadurch gekennzeichnet**, daß die zu aktualisierenden Programmdateien und/oder Datendateien jeweils einer Baugruppe (20, 22, 24, 26, 28) in eine Ladeliste (30) eingetragen werden.

8. Verfahren nach Anspruch 7**, dadurch gekennzeichnet**, daß nach Abschluß der Ladeliste (30) das Inbetriebnahme-Programm (15) die Segmente des Speichers (11) der Baugruppe löscht, in die die zu aktualisierenden Programmdateien und/oder Datendateien geladen werden und anschließend die Programmdateien und/oder Datendateien in die Segmente lädt.
